# EUROPÄISCHE PATENTSCHRIFT

(11) **EP 2 809 973 B1**
(45) Veröffentlichungstag und Bekanntmachung des Hinweises auf die Patenterteilung: **30.03.2016**
(21) Anmeldenummer: 13703361.9
(22) Anmeldetag: 31.01.2013
(51) Int. Cl.: F16J 15/08, F01N 13/18

(54) **METALLISCHE FLACHDICHTUNG**
FLAT METALLIC SEAL
JOINT MÉTALLIQUE PLAT

(30) Priorität: 03.02.2012 DE 102012100919
(43) Veröffentlichungstag der Anmeldung: 10.12.2014
(73) Patentinhaber: ElringKlinger AG, 72581 Dettingen (DE)
(72) Erfinder: KULLEN, Wilhelm, 72584 Hülben (DE)
(74) Vertreter: Hoeger, Stellrecht & Partner Patentanwälte mbB
(86) Internationale Anmeldenummer: PCT/EP2013/051938
(87) Internationale Veröffentlichungsnummer: WO 2013/113835

(56) Entgegenhaltungen:
- EP-A1- 0 500 273
- DE-A1- 10 232 339
- DE-A1-102006 014 285
- JP-A- H10 281 289

## Beschreibung

Die Erfindung betrifft eine Flachdichtung mit einer mindestens im Wesentlichen metallischen Dichtungsplatte, die mindestens zwei aufeinander angeordnete Dichtungslagen aufweist und in welcher mindestens eine abzudichtende Durchgangsöffnung ausgebildet ist, wobei die Dichtungsplatte mindestens eine die Materialgesamtdicke der Dichtungsplatte bereichsweise vergrößernde Abstützeinrichtung aufweist, welche von mehreren umgefalteten Dichtungslagenabschnitten gebildet wird.

Die Dichtungsplatte bzw. deren Lagen muss bzw. müssen dabei nicht rein metallisch sein, das heißt aus Blechlagen bestehen, vielmehr könnte eine oder beide Seiten mindestens einer oder gar aller Dichtungslagen ganz oder teilweise mit einer Beschichtung versehen sein, welche der sogenannten Mikroabdichtung, der Verminderung der Gleitreibung und/oder dem Korrosionsschutz dient.

Die Erfindung betrifft insbesondere eine an eine Flanschverbindung einer Abgasleitung eines Verbrennungsmotors angepasste Flachdichtung, insbesondere eine Flachdichtung, welche in einer Flanschverbindung einer Abgasrückführleitung, an einem Abgasturbolader oder zwischen einem Abgaskrümmer und einem Zylinderkopf verbaut wird.

Eine Flachdichtung der eingangs erwähnten Art ergibt sich aus der DE 102 13 900 A, wobei diese Dichtung als Zylinderkopfdichtung gestaltet ist, bei der mindestens eine Dichtungslage aus einem Federstahlblech besteht und eine höhenelastische Abdichtsicke aufweist, die eine Brennraum-Durchgangsöffnung umschließt, aber auch längs des äußeren Randes der Dichtungsplatte verlaufen kann. Bei dieser bekannten Zylinderkopfdichtung ist die Abstützeinrichtung als sogenannter Stopper ausgebildet, welcher der Abdichtsicke zugeordnet und dieser unmittelbar benachbart ist, um die Abdichtsicke beim Einbau und im Betrieb der Zylinderkopfdichtung vor unerwünschten und für eine dauerhafte Abdichtfunktion der Sicke schädlichen übermäßigen Abflachungen zu schützen. Die einen Stopper bildenden Dichtungslagenabschnitte, welche zungenförmig gestaltet und um ihre jeweilige Zungenwurzel umgefaltet oder streifenförmig gestaltet und längs eines Längsrandes des jeweiligen Dichtungslagenabschnitts umgefaltet wurden, sind sämtlich Bestandteile ein und derselben Dichtungslage, bei der es sich um die mit der Abdichtsicke ver-, sehene sogenannte Funktionslage oder um eine sogenannte Stopperlage der Dichtungsplatte dieser Zylinderkopfdichtung handeln kann.

Mit einer Flachdichtung der hier in Rede stehenden Art wird zwischen zwei einander zugekehrten Dichtflächen zweier einander benachbarter Bauteile, insbesondere zwischen zwei Flanschen einer Flanschverbindung, abgedichtet, welche zwischen sich einen die Flachdichtung aufnehmenden sogenannten Dichtspalt bilden und meist mit Hilfe von Montageschrauben gegeneinander verspannt werden, so dass die Flachdichtung zwischen den Bauteildichtflächen gepresst wird; die beiden Bauteile bzw. Flansche können aber auch mit Hilfe anderer bekannter Verbindungs- und Spannmittel miteinander verbunden und gegen die Flachdichtung angepresst werden. Bei den erwähnten Bauteilen kann es sich beispielsweise um einen Zylinderkopf und einen diesem benachbarten Abgaskrümmer handeln (in diesem Fall bildet die Flachdichtung eine Abgaskrümmerdichtung), aber auch um die Teile einer Flanschverbindung zwischen zwei Abschnitten einer Abgasleitung oder um andere, dicht miteinander zu verbindende Bauteile, in deren Verbindungsbereich der Austritt irgendeines Fluids mit Hilfe der Flachdichtung verhindert werden muss, was vor allem im Abgasbereich eines Verbrennungsmotors wegen der dort herrschenden hohen Temperaturen kritisch ist. Da die auf die eingebaute Flachdichtung einwirkenden Pressungskräfte meist nur mehr oder minder punktuell aufgebracht werden (vor allem bei Verwendung von Montageschrauben) und in keinem Anwendungsfall die die Flachdichtung zwischen sich aufnehmenden Bauteile als absolut starre Teile betrachtet werden können, ergeben sich meist erhebliche örtliche Schwankungen der auf die eingebaute Flachdichtung einwirkenden Pressungskräfte: Ohne besondere Maßnahmen sind diese Pressungskräfte an und in der unmittelbaren Nachbarschaft der Montageschrauben oder anderer Verbindungsmittel am größten und nehmen mit zunehmendem Abstand von den Verbindungsmitteln ab, das heißt im Falle von Montageschrauben sind sie in der Mitte zwischen zwei einander benachbarten Montageschrauben am kleinsten. Einen Einfluss auf die auf die eingebaute Flachdichtung einwirkenden Pressungskräfte haben aber auch örtlich unterschiedliche Bauteilsteifigkeiten und im Betrieb auftretende örtlich unterschiedliche Wärmedehnungen der die Flachdichtung zwischen sich aufnehmenden Bauteile - all dies führt dazu, dass ohne besondere Maßnahmen die Weite des die eingebaute Flachdichtung aufnehmenden Dichtspalts zwischen den Bauteilen in aller Regel örtlich unterschiedlich groß ist. Deshalb ist es bekannt, die höhenelastischen Abdichtsicken zugeordneten Stopper mit einer längs des Stoppers variablen Höhe zu gestalten und Verzügen der eine Flachdichtung zwischen sich aufnehmenden Bauteildichtflächen durch an der Flachdichtung vorgesehene Abstützelemente entgegen zu wirken, welche Abstützeinrichtungen für die die Flachdichtung zwischen sich aufnehmenden Bauteildichtflächen bilden und nicht die Funktion eines Verformungsbegrenzers/Stoppers für eine höhenelastische Sicke haben.

Des Weiteren sind andere Flachdichtungen bekannt aus DE 102 32 339 A1 und aus JP10281289.

Bei Flanschverbindungen in einer längeren Rohrleitung oder zwischen einem schwereren Modul, wie beispielsweise einem Ölfilter oder einem Turbolader, und einer dieses Modul tragenden Einheit, wie einem Verbrennungsmotor, kann sich im Betrieb aber auch folgendes Problem ergeben: Durch Erschütterungen, Vibrationen oder dergleichen, aber auch durch örtlich und/oder zeitlich unterschiedliche Wärmedehnungen wird ohne besondere Maßnahmen die Topographie des von den einander zugekehrten Flanschdichtflächen gebildeten und die Flachdichtung aufnehmenden Dichtspalts örtlich und zeitlich verändert, und an diese Änderungen der Dichtspalttopographie kann sich die Flachdichtung unter Umständen nicht anpassen, so dass sie die Änderungen der Dichtspalttopographie nicht kompensieren kann; dies gilt vor allem dann, wenn, wie dies im Abgasbereich eines Verbrennungsmotors der Fall ist, die Flachdichtung hohen Betriebstemperaturen ausgesetzt ist, so dass sie selbst dann keine nennenswerten federelastischen Eigenschaften mehr aufweist, wenn für eine oder mehrere Lagen der Flachdichtung klassische Federstahlbleche verwendet werden, wie dies beispielsweise bei metallischen Zylinderkopfdichtungen der Fall ist, denn bei klassischen Federstählen werden die Federstahleigenschaften schon bei ca. 400 °C drastisch abgebaut. Ohne besondere Maßnahmen können dann die Flanschverbindungen unter den geschilderten Betriebsbedingungen undicht werden.

Der Erfindung lag die Aufgabe zugrunde, Flachdichtungen der eingangs definierten Art vorzuschlagen, mit denen sich Abstützeinrichtungen mit örtlich unterschiedlicher wirksamer Höhe einfach und kostengünstig verwirklichen lassen; dabei kann es sich bei einer Abstützeinrichtung um einen einer Abdichtsicke zugeordneten Stopper, das heißt um einen Verformungsbegrenzer für die Abdichtsicke, um eine Einrichtung für eine Begrenzung oder Minimierung von Verformungen der Dichtflächen von Bauteilen, wie Flanschen, zwischen denen die Flachdichtung eingespannt wird, aber auch um eine Abstützeinrichtung handeln, mit deren Hilfe die Topographie des die Flachdichtung aufnehmenden Dichtspalts zumindest weitgehend stabilisiert wird.

Zur Lösung dieser Aufgabe wird erfindungsgemäß vorgeschlagen, eine Flachdichtung der eingangs definierten Art so zu gestalten, dass die Dichtungsplatte mindestens eine erste Dichtungslage mit mindestens einem ersten Lagenbereich aufweist, in dem die erste Dichtungslage eine erste Lagendicke hat und in dem mindestens ein erster umgefalteter Dichtungslagenabschnitt einer Abstützeinrichtung ausgebildet ist, und dass die Dichtungsplatte mindestens eine zweite Dichtungslage mit mindestens einem zweiten Lagenbereich aufweist, in dem die zweite Dichtungslage eine zweite Lagendicke hat und in dem mindestens ein zweiter umgefalteter Dichtungslagenabschnitt dieser Abstützeinrichtung ausgebildet ist, wobei die erste und die zweite Lagendicke voneinander verschieden sind, so dass diese Abstützeinrichtung bereichsweise unterschiedliche Materialgesamtdicken und damit unterschiedliche wirksame Höhen aufweist.

Am einfachsten ist es, für die erste und die zweite Dichtungslage Flachmaterialien unterschiedlicher Dicke zu verwenden (das heißt unbeschichtete Bleche, einseitig beschichtete Bleche oder beidseitig beschichtete Bleche in beliebiger Kombination), weil sich dann von selbst Dichtungslagenabschnitte unterschiedlicher Dicke und damit unterschiedlicher wirksamer Höhe ergeben, da die von der einen Dichtungslage gebildeten Dichtungslagenabschnitte eine andere Lagendicke haben als die von der anderen Dichtungslage gebildeten Dichtungslagenabschnitte, bevorzugt werden jedoch Ausführungsformen, bei denen die erste und die zweite Dichtungslage Blechlagen aus Blechen unterschiedlicher Blechstärke aufweisen.

Erfindungsgemäß kann die Flachdichtung aber auch so gestaltet werden, dass eine oder beide Dichtungslagen mit Beschichtungen von bereichsweise unterschiedlicher Dicke versehen sind oder die Dichtungslagenabschnitte oder manche der Dichtungslagenabschnitte einem die Blechdicke bereichsweise verändernden Prägevorgang unterzogen wurden, was angesichts der vergleichsweise geringen Fläche eines solchen Dichtungslagenabschnitts mit weit geringeren Prägekräften möglich ist als das Einprägen eines Höhenprofils in einen in seiner Längsrichtung nicht unterbrochenen Stopper.

In der DE 102 13 900 A wird zwar erwähnt, dass ein einer Abdichtsicke zugeordneter Stopper längs der Sicke ein Höhenprofil aufweisen kann, was dadurch erreicht werden soll, dass der Stopper von umgefalteten Dichtungslagenabschnitte gebildet wird, welche unterschiedliche Höhen aufweisen, so dass die Stopperhöhe in Sickenlängsrichtung variiert. Wie es zu diesen unterschiedlichen Höhen kommen soll, wird jedoch nicht beschrieben, und da bei dieser bekannten Zylinderkopfdichtung alle einen Stopper bildenden umgefalteten Dichtungslagenabschnitte aus ein und derselben Dichtungslage hergestellt werden und deshalb zunächst alle dieselbe originäre Lagendicke haben müssen, wird angenommen, dass die unterschiedlichen Höhen durch Prägen der umgefalteten oder umzufaltenden Dichtungslagenabschnitte erzeugt werden.

Wenn die Dichtungsplatte eine Dichtungslage mit einer ggf. höhenelastischen Sicke aufweist, kann eine erfindungsgemäße Abstützeinrichtung dieser Sicke (in einer Draufsicht auf die Dichtungsplatte) zugeordnet und benachbart sein, um die Sicke beim Einbau und im Betrieb der Flachdichtung vor einer unerwünscht starken Abflachung zu schützen. Bei der Sicke kann es sich um eine übliche Abdichtsicke handeln, welche um eine Fluid-Durchgangsöffnung (z.B. eine Brennraumöffnung, eine Abgas-Durchgangsöffnung oder eine Durchgangsöffnung für Kühlwasser oder Motoröl) herum verläuft, beispielsweise aber auch um eine ein Schraubenloch für den Durchtritt einer Montageschraube umschließende Sicke. Im Falle einer eine Fluid-Durchgangsöffnung umschließenden Abdichtsicke kann man eine erfindungsgemäße Abstützeinrichtung mit Vorteil radial außerhalb der Abdichtsicke anordnen, entweder zur Bildung eines der Abdichtsicke unmittelbar benachbarten Stoppers oder zur Bildung einer sogenannten Hinterlandabstützung - in diesem Fall ist die Abstützeinrichtung in einem deutlichen Abstand von der Abdichtsicke angeordnet, und zwar so und mit einer solchen Gestaltung, dass sie die Dichtspalttopographie im Betrieb stabilisiert und/oder der Verformung der Dichtflächen von die Flachdichtung zwischen sich aufnehmenden Bauteilen entgegenwirkt, z.B. der Verformung der Flansche einer im Abgasbereich eines Verbrennungsmotors liegenden Flanschverbindung. Typischerweise ist eine Hinterlandabstützung an der Peripherie der Dichtungsplatte angeordnet, wo gegebenenfalls mehrere erfindungsgemäße Abstützeinrichtungen vorgesehen sind, z.B. im Bereich der beiden Längsenden einer länglichen Flachdichtung. Je nach Anwendungsart und Gestaltung der Flachdichtung kann in diesem Fall die Abstützeinrichtung aber auch noch als Stopper für die Abdichtsicke wirken.

Die umgefalteten Dichtungslagenabschnitte einer der Dichtungslagen könnten alle auf die Letztere umgefaltet sein und gegen diese Dichtungslage anliegen, und Letztere könnte im Inneren einer mehrlagigen Dichtungsplatte angeordnet sein, so wie dies in der DE 102 13 900 A zeichnerisch dargestellt ist. Die umgefalteten Dichtungslagenabschnitte einer der Dichtungslagen könnten aber auch auf einer anderen Dichtungslage aufliegen und/oder sich auf einer Außenseite der Dichtungsplatte befinden. So ist es insbesondere möglich, die umzufaltenden Dichtungslagenabschnitte einer der Dichtungslagen an der Peripherie der Dichtungsplatte vorzusehen und sie dann so umzufalten, dass sie den Außenrand einer benachbarten Dichtungslage übergreifen und auf Letzterer aufliegen; alternativ kann mindestens einer der umzufaltenden Dichtungslagenabschnitte einer Dichtungslage im Abstand von der Peripherie der Dichtungsplatte angeordnet sein und einen Ausschnitt einer benachbarten Dichtungslage durchgreifen sowie auf Letztere umgefaltet sein.

Liegen die Dichtungslagenabschnitte einer erfindungsgemäßen Abstützeinrichtung auf einer ersten Außenseite der Dichtungsplatte auf und werden von einer Dichtungslage gebildet, welche die zweite Außenseite der Dichtungsplatte bildet und deren umgefaltete Dichtungslagenabschnitte die erste Außenseite der Dichtungsplatte übergreifen, können die umgefalteten Dichtunglagenabschnitte auch den Zusammenhalt der mehrlagigen Dichtungsplatte gewährleisten, so dass auf zusätzliche Maßnahmen für die Verbindung der Dichtungslagen miteinander verzichtet werden kann.

Wie bei der sich aus der DE 102 13 900 A ergebenden Zylinderkopfdichtung können auch bei einer erfindungsgemäßen Flachdichtung mindestes bei einem Teil der Dichtungslagenabschnitte diese streifenförmig gestaltet und an einem Längsrand des jeweiligen Dichtungslagenabschnitts umgefaltet sein, für die Bildung einer ein Höhenprofil aufweisenden Abstützeinrichtung bevorzugt werden jedoch Ausführungsformen, bei denen mindestens bei einem Teil der Dichtungslagenabschnitte diese zungenförmig gestaltet und um die jeweilige Zungenwurzel umgefaltet sind - die Dichtungslagenabschnitte können dann in Längsrichtung der Abstützeinrichtung verhältnismäßig schmal gestaltet werden, so dass sich mit ihnen ein Höhenprofil verwirklichen lässt, dessen Höhe sich in Längsrichtung der Abstützeinrichtung in verhältnismäßig kurzen Abständen ändert.

Wird eine erfindungsgemäße Abstützeinrichtung gewünscht, deren Höhenprofil nicht nur zwei unterschiedliche wirksame Höhen aufweist, so lässt sich dies entweder dadurch bewirken, dass ein Teil der umgefalteten Dichtungslagenabschnitte vor oder nach dem Umfalten einem gegebenenfalls nur partiellen Prägevorgang unterworfen wird, im Falle einer mehr als zwei Dichtungslagen aufweisenden Dichtungsplatte ist es aber einfacher, mehr als zwei Dichtungslagen aus Lagen unterschiedlicher Dicke herzustellen und die Abstützeinrichtung aus umgefalteten Dichtungslagenabschnitten von mehr als zwei Dichtungslagen zu bilden. Weitere Alternativen werden später noch beschrieben werden.

Bei bevorzugten Ausführungsformen der erfindungsgemäßen Flachdichtung ist mindestens eine Abstützeinrichtung - in einer Draufsicht auf die Dichtungsplatte - länglich gestaltet (das heißt sie hat eine generelle Form mit einer größeren Länge als Breite) und wird von mindestens zwei in Längsrichtung der Abstützeinrichtung hintereinander liegenden (was nicht unbedingt mit unmittelbar aufeinander folgend gleichzusetzen ist) umgefalteten Dichtungslagenabschnitten gebildet, wobei die Materialgesamtdicken der Dichtungsplatte in den Bereichen wenigstens zweier Dichtungslagenabschnitte voneinander verschieden sind. Eine solche Abstützeinrichtung weist also ein sich in deren Längsrichtung erstreckendes Höhenprofil auf, bei dem es sich aufgrund seiner Bildung durch umgefaltete Dichtungslagenabschnitte nicht um ein Höhenprofil mit einem kontinuierlichen Verlauf und einer stetigen Änderung der Profilhöhe handeln muss. Wie sich aus dem Vorstehenden ergibt, wird ein solches Höhenprofil am einfachsten erreicht, wenn die Lagendicken wenigstens zweier Dichtungslagenabschnitte voneinander verschieden sind.

Bei bevorzugten Ausführungsformen der erfindungsgemäßen Flachdichtung wird eine Abstützeinrichtung von mindestens zwei in den Längsendbereichen der Abstützeinrichtung vorgesehenen ersten umgefalteten Dichtungslagenabschnitten und mindestens einem in einem mittleren Bereich der Abstützeinrichtung vorgesehenen zweiten umgefalteten Dichtungslagenabschnitt gebildet, wobei die Materialgesamtdicken der Dichtungsplatte in den Bereichen der ersten Dichtungslagenabschnitte und im Bereich des zweiten Dichtungslagenabschnitts voneinander verschieden sind. Eine solche Abstützeinrichtung kann beispielsweise in ihren Längsendbereichen eine größere oder eine kleinere wirksame Höhe aufweisen als in ihrem mittleren Bereich.

Wie bereits erwähnt wurde, führen mit Hilfe nur lokal vorgesehener Verbindungsmittel, wie beispielsweise Montageschrauben, nur mehr oder minder punktuell aufgebrachte Pressungskräfte ohne besondere Maßnahmen zu einem die Flachdichtung aufnehmenden Dichtspalt, dessen Weite im Bereich der Verbindungsmittel am kleinsten und in zwischen den Verbindungsmitteln liegenden mittleren Bereichen am größten ist. Deshalb werden besonders solche Ausführungsformen der erfindungsgemäßen Flachdichtung empfohlen, bei denen sich eine längliche Abstützeinrichtung zwischen den Positionen zweier Verbindungsmittel, insbesondere also zwischen zwei Schraubenlöchern für den Durchtritt von Montageschrauben, erstreckt und die Materialgesamtdicke der Abstützeinrichtung in Verbindungsmittel-nahen Bereichen kleiner ist als in einem zwischen diesen Bereichen liegenden Mittelbereich der Abstützeinrichtung.

Das Grundprinzip der Erfindung lässt sich mit Vorteil auch so verwirklichen, dass die Dichtungsplatte mindestens eine dickere sowie eine dünnere Dichtungslage und die Abstützeinrichtung mindestens zwei Dichtungslagenabschnitte der dickeren Dichtungslage aufweist, von denen ein erster Dichtungslagenabschnitt auf die dickere und ein zweiter Dichtungslagenabschnitt auf die dünnere Dichtungslage umgefaltet ist. In diesem Fall ist die wirksame Höhe der Abstützeinrichtung im Bereich des ersten umgefalteten Dichtungslagenabschnitts gleich der Dicke der dickeren Dichtungslage abzüglich der Dicke der dünneren Dichtungslage und im Bereich des zweiten umgefalteten Dichtungslagenabschnitts gleich der Dicke der dickeren Dichtungslage. Bei einer solchen Ausführungsform kann sich die dünnere Dichtungslage nur bis zur freien Kante des ersten umgefalteten Dichtungslagenabschnitts bzw. bis zu den freien Kanten der umgefalteten ersten Dichtungslagenabschnitte erstrecken, bevorzugt werden jedoch Ausführungsformen, bei denen die dünnere Dichtungslage eine Aussparung aufweist, welche - in einer Draufsicht auf die Dichtungsplatte - den umgefalteten ersten Dichtungslagenabschnitt zumindest im Wesentlichen aufnimmt, so dass die von der dickeren und der dünneren Dichtungslage gebildete Materialgesamtdicke im Bereich des umgefalteten zweiten Dichtungslagenabschnitts um die Lagendicke der dünneren Dichtungslage größer ist als im Bereich des umgefalteten ersten Dichtungslagenabschnitts. Weist in einem solchen Fall bei einer mehrlagigen Dichtungsplatte nur die dickere Dichtungslage umgefaltete Dichtungslagenabschnitte auf, lässt sich dennoch eine Abstützeinrichtung mit zwei unterschiedlichen wirksamen Höhen realisieren; weisen hingegen zwei unterschiedlich dicke Dichtungslagen umgefaltete Dichtungslagenabschnitte auf, lässt sich sogar eine Abstützeinrichtung mit drei unterschiedlichen wirksamen Höhen verwirklichen.

Eine Vermehrung der wirksamen Höhen einer erfindungsgemäßen Abstützeinrichtung lässt sich ferner dadurch erreichen, dass mindestens eine Dichtungslage im Bereich mindestens eines Dichtungslagenabschnitts nicht nur ein Mal umgefaltet wird, das heißt um ca. 180 °, sondern dass der Dichtungslagenabschnitt selbst bereichsweise noch ein Mal oder mehrfach umgefaltet wird, so dass der Dichtungslagenabschnitt im Querschnitt die Gestalt eines flachen liegenden U oder beispielsweise die Gestalt eines flachen S aufweist, was sich vor allem an einer verhältnismäßig dünnen Dichtungslage ohne Weiteres verwirklichen läst.

Bei besonders bevorzugten Ausführungsformen erfindungsgemäßer Flachdichtungen erstrecken sich die Dichtungslagen mit umgefalteten Dichtungslagenabschnitten zumindest im Wesentlichen über die gesamte Dichtungsplatte.

Weitere Merkmale, Vorteile und Einzelheiten der Erfindung ergeben sich aus der beigefügten zeichnerischen Darstellung und/oder aus der nachfolgenden Beschreibung mehrerer besonders vorteilhafter Ausführungsformen der erfindungsgemäßen Flachdichtung; in den Zeichnungen zeigen:
- Fig. 1: eine Draufsicht auf eine erste Ausführungsform einer erfindungsgemäßen Flachdichtung;
- Fig. 2 bis 5: Schnitte durch diese erste Ausführungsform gemäß den Linien 2-2 bzw. 3-3 bzw. 4-4 bzw. 5-5 in Fig. 1;
- Fig. 6: einen Schnitt durch eine zweite Ausführungsform, bei welcher die umgefalteten Dichtungslagenabschnitte von der Peripherie der Dichtungsplatte beabstandet sein sollen;
- Fig. 7A bis 7E: Schnitte durch fünf weitere Ausführungsformen der erfindungsgemäßen Flachdichtung, wobei jede dieser Schnittdarstellungen nur umgefaltete Dichtungslagenabschnitte jeweils einer der Dichtungslage der betreffenden Flachdichtung zeigen, welche miteinander kombiniert werden können;
- Fig. 8A: einen Bereich einer achten Ausführungsform der erfindungsgemäßen Flachdichtung in einer geschnittenen isometrischen Darstellung;
- Fig. 8B: einen anderen Bereich dieser achten Ausführungsform im Schnitt;
- Fig. 8C: eine gegenüber der Fig. 8A abgewandelte neunte Ausführungsform eines Bereichs einer erfindungsgemäßen Flachdichtung in einer isometrischen Darstellung, und
- Fig. 9: einen der Fig. 5 entsprechenden Schnitt durch eine zehnte Ausführungsform der erfindungsgemäßen Flachdichtung.

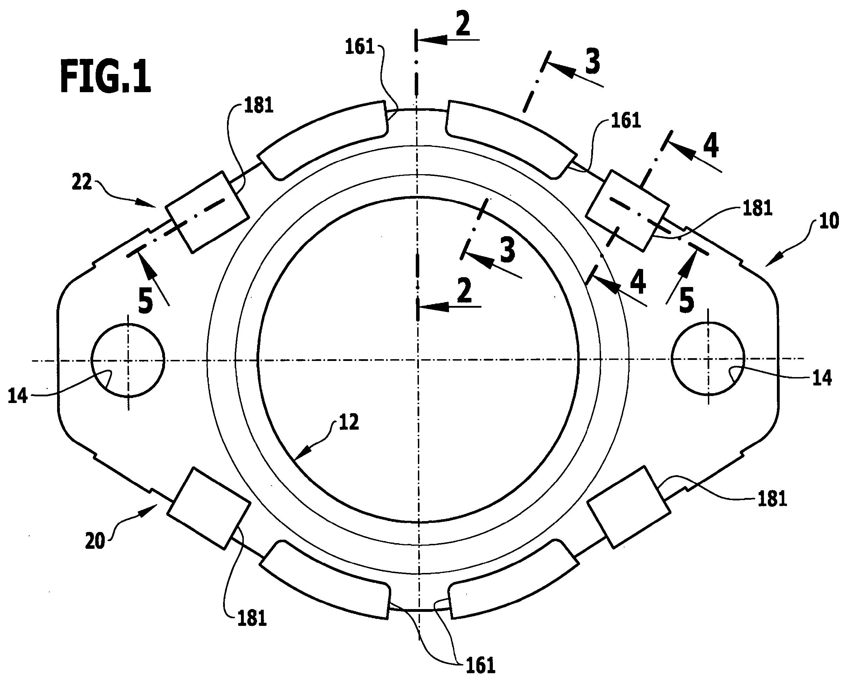

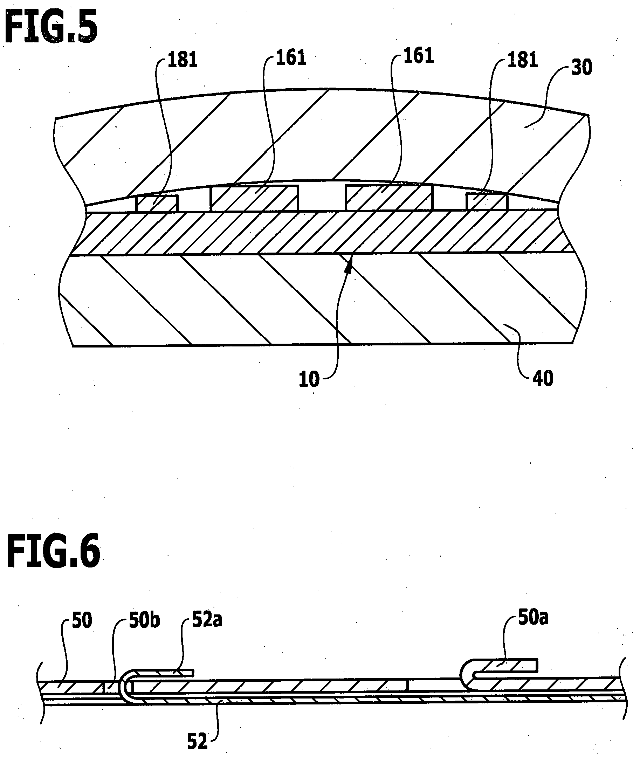

Bei der in den Fig. 1 bis 5 dargestellten erfindungsgemäßen Flachdichtung handelt es sich um eine besonders bevorzugte Ausführungsform, nämlich eine Flachdichtung für eine Flanschverbindung im Abgasbereich eines Verbrennungsmotors, welche zwischen zwei nur in Fig. 5 gezeigten Flanschen der Flanschverbindung einzubauen und insbesondere mittels Montageschrauben einzuspannen ist. Die Flachdichtung hat eine Dichtungsplatte 10 mit einer Abgas-Durchgangsöffnung 12 und - in diesem Fall - zwei Schraubenlöchern 14 für den Durchtritt von Montageschrauben und besteht aus einer gemäß Fig. 1 oberen, dickeren ersten Dichtungslage 16 sowie einer untere, dünnere zweiten Dichtungslage 18, die aus Stahlblechen hergestellt wurden, welche auch bei Betriebstemperaturen der Dichtung nicht verzundern (derartige Stahlbleche sind dem Fachmann bekannt und bedürfen deshalb keiner spezifischen Beschreibung). Ist eine erfindungsgemäße Flachdichtung im Betrieb weniger hohen Temperaturen ausgesetzt als eine im Abgasbereich eines Verbrennungsmotors verwendete Flachdichtung, beispielsweise eine Abgaskrümmerdichtung oder eine Flanschdichtung an einem Abgas-Turbolader, lassen sich die sogenannten Funktionslagen einer erfindungsgemäßen Flachdichtung aus Federstahlblech herstellen, für die übliche Federstähle verwendet werden; für eine Funktionslage bzw. die Funktionslagen einer im Abgasbereich zu verbauenden erfindungsgemäßen Flachdichtung eignen sich bekannte hochlegierte Federstähle, insbesondere solche aus einer Nickel-Basislegierung, da derartige Federstähle auch bei hohen Betriebstemperaturen noch federelastische Eigenschaften haben. In diesem Zusammenhang sei erwähnt, dass man unter einer Funktionslage einer metallischen Flachdichtung eine solche Dichtungslage versteht, welche mindestens eine im eingebauten Zustand und im Betrieb der Dichtung höhenelastische Sicke, insbesondere eine solche Abdichtsicke, aufweist.

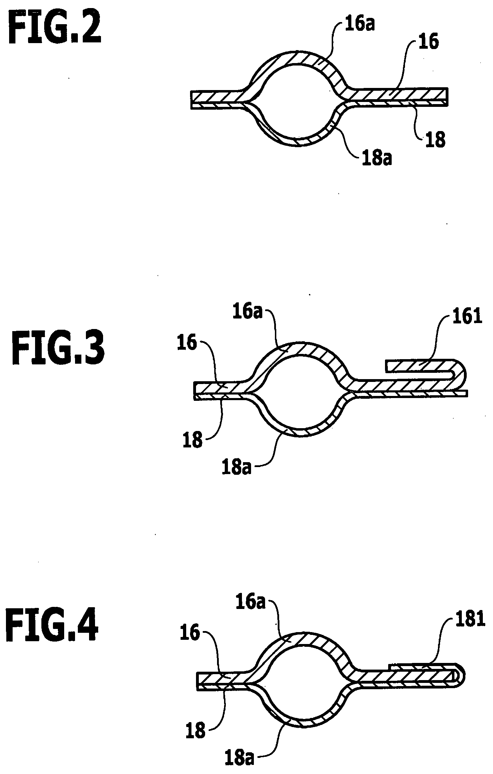

Die beiden Dichtungslagen 16, 18 sind im vorliegenden Fall erfindungsgemäß im Wesentlichen deckungsgleich, und jede Dichtungslage besitzt eine in das Blech eingeprägte Abdichtsicke 16a bzw. 18a, die in einer Draufsicht auf die Dichtungsplatte 10 übereinander liegen und die Abgas-Durchgangsöffnung 12 kreisringförmig umschließen. Bei der dargestellten Ausführungsform handelt es sich bei den beiden Abdichtsicken 16a, 18a um sogenannte Vollsicken mit ungefähr kreisbogen- oder trapezförmigem Querschnitt, die Abdichtsicken könnten aber auch jede andere, dem Fachmann aus dem Stand der Technik bekannte Querschnittsform habe, beispielsweise kann es sich um sogenannte Halbsicken handeln. Gleichfalls bevorzugt wird eine Gestaltung der Dichtung derart, dass jede Dichtungslage 16, 18 zwischen ihrer Abdichtsicke 16a, 18a und dem Rand der Abgas-Durchgasöffnung 12 einen flachen Abschnitt besitzt, wobei diese flachen Abschnitte bei eingebauter und gepresster Dichtung ebenso aneinander anliegen wie diejenigen Bereiche der beiden Dichtungslage 16, 18, welche radial außerhalb der Abdichtsicken 16a, 18a liegen. Anders als in den Fig. 2 bis 4 dargstellt und vorstehend beschrieben, können die beiden Dichtungslagen auch mit Sicken versehen sein, welche mit ihren Vorsprüngen nicht voneinander weg weisen, sondern auf die jeweils andere Dichtungslage zu vorspringen. Schließlich sei noch auf Folgendes hingewiesen: Weist eine Sicke einer Dichtungslage im Betrieb keine oder keine nennenswerten elastischen Eigenschaften auf, sondern wird beim Einbau und/oder im Betrieb der Flachdichtung zumindest im Wesentlichen plastisch verformt und abgeflacht, führt die Sicke im Bereich ihres Kamms dennoch zu einer erhöhten Pressung in Richtung senkrecht zur Ebene der Dichtungsplatte und kann infolge dessen eine Abdichtfunktion erfüllen, vor allem dann, wenn die Dichtspalttopographie aufgrund einer erfindungsgemäßen Gestaltung der Flachdichtung im Betrieb durch die Flachdichtung stabilisiert wird.

Die Dichtungsplatte 10 ist mit zwei erfindungsgemäßen Abstützeinrichtungen 20 und 22 versehen, deren jede eine längliche Grundform hat, bei der dargestellten bevorzugten Ausführungsform an der Peripherie der Dichtungsplatte 10 angeordnet ist, sich jeweils über den größten Teil eines im Wesentlichen länglichen Dichtungsplattenbereichs erstreckt, der radial außerhalb der Abdichtsicken 16a, 18a und im dargestellten Fall zwischen den beiden Schraubenlöchern 14 liegt und deren jede aus mehreren Segmenten, im dargestellten Fall aus vier Segmenten, besteht, die von umgefalteten Dichtungslagenabschnitten der beiden Dichtungslagen 16, 18 gebildet werden. Im Folgenden wird nur die Abstützeinrichtung 22 näher erläutert, jedoch gilt für die andere Abstützeinrichtung 20 dasselbe.

Die in Fig. 1 gezeigten Segmente der Abstützeinrichtung 22 werden von umgefalteten ersten und zweiten Dichtungslagenabschnitten 181 bzw. 161 gebildet, bei denen es sich um zungenförmig bzw. streifenförmig gestaltete sowie um 180 ° umgebogene Abschnitte der Dichtungslage 18 bzw. der Dichtungslage 16 handelt. Wie die Fig. 3 und 4 erkennen lasses, sind die dickeren Dichtungslagenabschnitte 161 auf die Dichtungslage 16 selbst umgefaltet, während die dünneren Dichtungslagenabschnitte 181 den Rand der Dichtungslage 16 umgreifen und auf die Dichtungslage 16 umgefaltet sind.

Durch die umgefalteten Dichtungslagenabschnitte 181 werden die beiden Dichtungslagen 16 und 18 der Dichtungsplatte 10 zusammengehalten, so dass keine weiteren Verbindungsmittel erforderlich sind.

Jede der beiden Abstützeinrichtungen 20 und 22 hat zwei Endbereiche, von denen im dargestellten Fall jeder einem der Schraubenlöcher 14 benachbart ist und von einem dünneren umgefalteten Dichtungslagenabschnitt 181 gebildet wird, sowie einen mittleren Bereich, der von zwei dickeren Dichtungslagenabschnitte 161 gebildet wird, so dass jede Abstützeinrichtung ein Höhenprofil aufweist, welches in den beiden Endbereichen der Abstützeinrichtung eine geringere Höhe aufweist als in deren Mittelbereich.

Erfindungsgemäß können die beiden Abstützeinrichtungen 20, 22 zwei Funktionen erfüllen:
Primär werden durch die beiden Abstützeinrichtungen die beiden Flansche 30 und 40 der Flanschverbindung (sh. Fig. 5), zwischen denen die erfindunggemäße Flachdichtung einzubauen und einzuspannen ist, abgestützt und dadurch die Topographie des von den beiden Flanschen definierten und die Flachdichtung aufnehmenden Dichtspalts im Betrieb stabilisiert; des Weiteren können die beiden Abstützeinrichtungen 20, 22 verhindern, dass die Abdichtsicken 16a, 18a beim Einbau und im Betrieb der Flachdichtung in unerwünschter Weise zu stark abgeflacht werden, das heißt die Abstützeinrichtungen können für die beiden Abdichtsicken auch als Stopper wirken.

Erfindungsgemäß ist die Materialgesamtdicke der Dichtungsplatte 10 in den Bereichen der umgefalteten Dichtungslagenabschnitte 161, 181 um die Materialdicke der Dichtungslage 16 bzw. um die Materialdicke der Dichtunglage 18 größer als außerhalb der Bereiche der umgefalteten Dichtungslagenabschnitte bzw. der Abstützeinrichtungen 20 und 22. Die wirksamen Höhen der Abstützeinrichtung sind also gleich der Materialdicke der Dichtungslage 16 bzw. der Dichtungslage 18 und kleiner als die Summe der Höhen der unverformten Abdichtsicken 16a und 18a.

Der in Fig. 5 dargestellte Schnitt deutet die Dichtungsplatte 10 nur als Ganzes an und zeigt die umgefalteten Dichtungslagenabschnitte 181, 161 nur schematisch und übertrieben hoch, um das Höhenprofil der Abstützeinrichtung 22 deutlich darstellen zu können. Außerdem zeigt die Fig. 5 Teilbereiche zweier Flansche 30 und 40 einer Flanschverbindung, zwischen denen die erfindungsgemäße Flachdichtung eingebaut und durch nicht dargestellte Verbindungsmittel der beiden Flansche eingespannt ist. Der Fig. 5 lässt sich also die Topographie des von den einander zugewandten Dichtflächen der beiden Flansche 30 und 40 gebildeten und definierten Dichtspalts entnehmen, in dem die erfindungsgemäße Flachdichtung eingebaut und eingespannt ist, wobei in Fig. 5 auch die Krümmung des Flanschs 30 übertrieben groß dargestellt wurde, so dass die Fig. 5 auch die örtlichen Unterschiede in der Höhe bzw. Weite des Dichtspalts übertrieben groß darstellt. Aus der Fig. 5 erschließt sich auch, dass es empfehlenswert sein kann, die Dichtungslagenabschnitte, beispielsweise also die Dichtungslagenabschnitte 181 und 161, vor oder nach dem Umfalten erfindungsgemäß bereichsweise in ihrer Dicke durch Prägevorgänge so zu verändern (gegenüber der in Fig. 5 dargestellten Querschnittsform), dass die umgefalteten Dichtungslagenabschnitte ein an die Dichtspalt-Topographie angepasstes Höhenprofil aufweisen, das heißt, an die Krümmung der gegen die umgefalteten Dichtungslagenabschnitte anliegenden Flansch-Dichtfläche angepasst sind.

Anhand der Fig. 6 sowie 7A bis 7E, 8A bis 8C und 9 werden nun einige alternative Gestaltungen erfindungsgemäßer Flachdichtungen erläutert.

Die Fig. 6 zeigt einen Schnitt durch einen Bereich einer erfindungsgemäßen Flachdichtung, welcher von Außen- und Innenrändern der Dichtungsplatte dieser Flachdichtung beabstandet ist. Die Dichtungsplatte dieser Flachdichtung wird nur beispielhaft von zwei Dichtungslagen gebildet, nämlich einer dickeren oberen Dichtungslage 50 und einer dünneren unteren Dichtungslage 52. Aus der Dichtungslage 50 wurden durch Anstanzen und Umfalten mehrere Dichtungslagenabschnitte 50a gebildet, von denen die Fig. 6 nur einen Dichtungslageabschnitt zeigt; diese Dichtungslagenabschnitte wurden auf die Dichtungslage 50 selbst umgefaltet und gegen deren Oberseite angelegt. Aus der Dichtungslage 52 wurden gleichfalls durch Anstanzen und Umfalten mehrere Dichtungslagenabschnitte 52a gebildet, von denen die Fig. 6 gleichfalls nur einen Dichtungslagenabschnitt 52a zeigt. Damit die Dichtungslagenabschnitte 52a gleichfalls auf die Oberseite der Dichtungslage 50 umgefaltet und aufgelegt werden können, weist die Dichtungslage 50 für jeden umgefalteten Dichtungslagenabschnitt 52a eine fensterartige Aussparung 50b auf, durch die der zunächst hochgestellte Dichtüngslagenabschnitt 52a hindurchgeführt und sodann auf die Dichtungslage 50 zurückgefaltet wird. Nur der Vollständigkeit halber sei noch darauf hingewiesen, dass die Bildung des in Fig. 6 gezeigten umgefalteten Dichtungslagenabschnitt 50a natürlich eine entsprechende Aussparung in der Dichtungslage 50 hinterlässt.

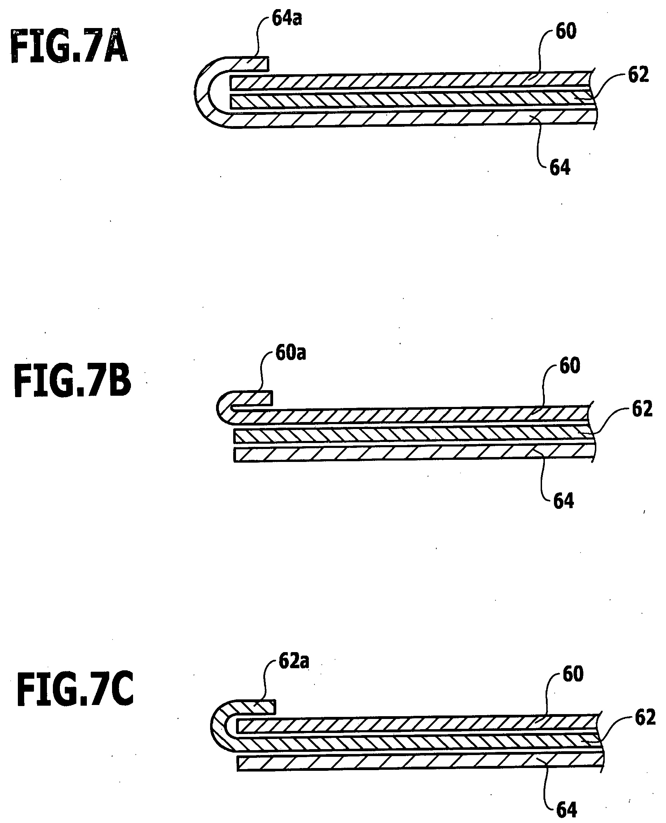

Die Fig. 7A bis 7E zeigt Gestaltungen erfindungsgemäßer Abstützeinrichtungen, welche am Außenrand und/oder einem Innenrand der Dichtungsplatte einer erfindungsgemäßen Flachdichtung vorgesehen werden können, wobei die Anordnung an einem Innenrand natürlich weniger beengte Platzverhältnisse voraussetzt als bei der in Fig. 1 dargestellten Flachdichtung.

Die Fig. 7A zeigt einen Bereich einer dreilagigen Dichtungsplatte mit drei Dichtungslagen 60, 62 und 64, welche alle drei unterschiedliche Materialdicken aufweisen (was in den Fig. 7A bis 7C der Einfachheit halber nicht dargestellt wurde). An ersten Stellen der Dichtungsplatte bilden Dichtungslagenabschnitte 64a der untersten Dichtungslage 64 erste Segmente einer erfindungsgemäßen Abstützeinrichtung; die Fig. 7A zeigt nur einen der umgefalteten Dichtungslagenabschnitte 64a, welche jedoch alle unter Umgreifung des in Fig. 7A dargestellten Randes der Dichtungsplatte auf die Oberseite der obersten Dichtungslage 60 umgefaltet wurden. An anderen, zweiten Stellen der Dichtungsplatte weist deren oberste Dichtungslage 60 Dichtungslagenabschnitte 60a auf, welche sämtlich auf die Oberseite der Dichtungslage 60 umgefaltet wurden und von denen die Fig. 7B nur einen zeigt. Die umgefalteten Dichtungslagenabschnitte 60a sollen zweite Segmente der erfindungsgemäßen Abstützeinrichtung bilden. An wiederum anderen, dritten Stellen der Dichtungsplatte weist diese Abstützeinrichtung dritte Segmente auf, gebildet von umgefalteten Dichtungslagenabschnitten 62a der mittleren Dichtungslage 62; die Fig. 7C zeigt wiederum nur einen dieser umgefalteten Dichtungslagenabschnitte 62a, die jedoch alle unter Umgreifung des Randes der Dichtungslage 60 auf die Oberseite dieser Dichtungslage umgefaltet wurden.

Diese erfindungsgemäße Abstützeinrichtung, von welcher die Fig. 7A bis 7C einzelne Segmente zeigen, weist also ein Höhenprofil mit drei unterschiedlichen wirksamen Höhen auf.

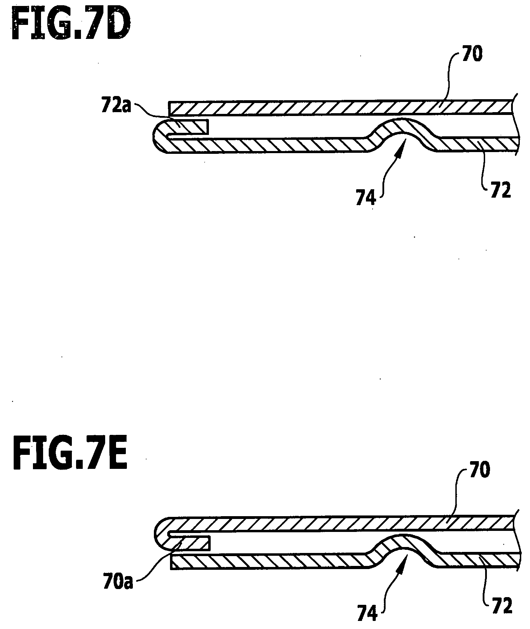

Die Fig. 7D und 7E zeigen zwei weitere Varianten jeweils eines Segments einer erfindungsgemäßen Abstützeinrichtung, die in der Nachbarschaft einer Sicke einer erfindungsgemäßen Flachdichtung angeordnet ist. Jede der Fig. 7D und 7E zeigt zwei Dichtungslagen (welche unterschiedliche Materialdicken haben sollen, was zeichnerisch jedoch nicht dargestellt wurde) einer Dichtungsplatte, die zwei oder mehr Dichtungslagen aufweist. Die Fig. 7D und 7E zeigen zwar nur eine Sicke in einer der Dichtungslagen, mindestens eine zweite Dichtungslage könnte aber gleichfalls mit einer Sicke versehen sein. Schließlich zeigen die Fig. 7D und 7E jeweils nur einen einzigen umgefalteten Dichtungslagenabschnitt einer der Dichtungslagen, es versteht sich aber natürlich von selbst, dass eine andere Dichtungslage mit anderer Materialdicke gleichfalls umgefaltete Dichtungslagenabschnitte aufweist.

Von den beiden Dichtungslagen 70 und 72 der in Fig. 7D teilweise dargestellten Dichtungsplatte ist die Dichtungslage 72 mit einer Sicke 74 versehen und weist außerdem umgefaltete Dichtungslagenabschnitte 72a auf, welche auf diejenige Seite der Dichtungslage 72 umgefaltet wurden, über welche die Sicke 74 vorspringt. Die umgefalteten Dichtungslagenabschnitte 72a bilden also erste Segmente einer erfindungsgemäßen Abstützeinrichtung, die für die Sicke 74 eine Stopperfunktion haben kann.

Die Fig. 7E soll eine andere Stelle der selben, von den Dichtungslagen 70 und 72 gebildeten Dichtungsplatte darstellen, an welcher die Dichtungslage 70 einen umgefalteten Dichtungslagenabschnitt 70a besitzt. Für diesen gilt dasselbe wie für den umgefalteten Dichtungslagenabschnitt 72a, abgesehen davon, dass die Materialdicken der Dichtungslagen 70 und 72 und damit der umgefalteten Dichtungslagenabschnitte 70a und 72a unterschiedlich sein sollen.

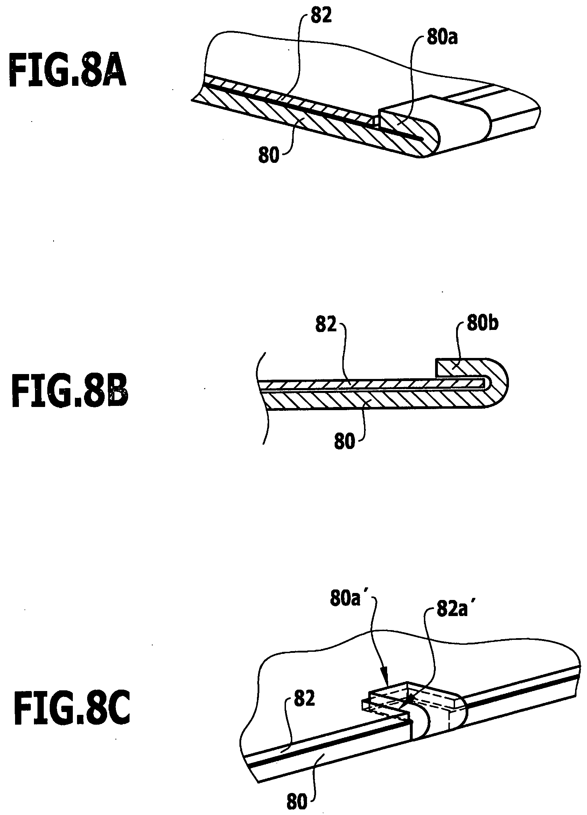

In den Fig. 8A und 8B sind zwei Bereiche ein und derselben erfindungsgemäßen Flachdichtung dargestellt, deren Dichtungsplatte nur zwei oder mehr Dichtungslagen haben kann. Die Fig. 8A und 8B zeigen eine dickere Dichtungslage 80 und eine dünnere Dichtungslage 82, von welchen nur die dickere Dichtungslage 80 mit umgefalteten Dichtungslagenabschnitten versehen sein kann. In dem in Fig. 8A dargestellten Bereich hat die Dichtungslage 80 einen umgefalteten Dichtungslagenabschnitt 80a, welcher auf die eigentliche Dichtungslage 80 zurückgefaltet ist, in Längsrichtung der beim Umfalten des Dichtungslagenabschnitts 80a entstehenden Biegelinie kann die Dichtungslage 80 jedoch noch mindestens einen weiteren umgefalteten Dichtungslagenabschnitt 80a aufweisen, wobei diese umgefalteten Dichtungslagenabschnitte in Längsrichtung der Biegelinie im Abstand voneinander angeordnet sind. Bei der dargestellten Ausführungsform verläuft eine gemäß der Zeichnungsfigur rechte Kante der dünneren Dichtungslage 82a in der Nachbarschaft der gemäß der Zeichnungsfigur linken, das heißt freien Kante des umgefalteten Dichtungslagenabschnitts 80a bzw. aller Dichtungslagenabschnitte 80a. Wie die Fig. 8A erkennen lässt, hat die erfindungsgemäße Abstützeinrichtung im Bereich des umgefalteten Dichtungslagenabschnitts 80a bzw. der umgefalteten Dichtungslagenabschnitte 80a eine wirksame Höhe, welch gleich der Differenz der Materialdicken der Dichtungslagen 80 und 82 ist.

In dem in der Fig. 8B gezeigten Bereich dieser Ausführungsform weist die dickere Dichtungslage 80 einen umgefalteten Dichtungslagenabschnitt 80b auf, welcher auf die dünnere Dichtungslage 82 umgefaltet ist, so dass dort die erfindungsgemäße Abstützeinrichtung eine wirksame Höhe aufweist, welche gleich der Materialdicke der Dichtungslage 80 ist. Der umgefaltete Dichtungslagenabschnitt 80b (oder mehrere solche Dichtungslagenabschnitte) könnte zwischen zwei umgefalteten Dichtungslagenabschnitten 80a liegen, wobei dann allerdings die dünnere Dichtungslage 82 im Bereich eines umgefalteten Dichtungslagenabschnitts 80b Letzteren untergreifen muss. In diesem Fall hat eine erfindungsgemäße Abstützeinrichtung ein Höhenprofil mit zwei unterschiedlichen wirksamen Höhen, gebildet von umgefalteten Dichtungslagenabschnitten 80a und 80b, obwohl nur Abschnitte einer einzigen Dichtungslage, nämlich der Dichtungslage 80, umgefaltet wurden. Alternativ könnte die Dichtungsplatte eine erfindungsgemäße Abstützeinrichtung aufweisen, gebildet von einem oder mehreren umgefalteten Dichtungslagenabschnitten 80a der Dichtungslage 80 und einem oder mehreren umgefalteten Dichtungslagenabschnitten der dünneren Dichtungslage 82.

Die Fig. 8C zeigt eine Variante des in Fig. 8A dargestellten Bereichs einer erfindungsgemäßen Flachdichtung, wobei auch dieser Bereich eine dickere Dichtungslage 80 sowie eine dünnere Dichtungslage 82 aufweist. Die dickere Dichtungslage 80 ist wiederum mit mindestens einem umgefalteten Dichtungslagenabschnitt 80a' versehen, der auf die eigentliche Dichtungslage 80 zurückgefaltet ist, jedoch bei dieser Modifikation in einen Ausschnitt 82a' der dünneren Dichtungslage 82 eingreift und von diesem Ausschnitt im Wesentlichen aufgenommen wird, sieht man davon ab, dass der umgefaltete Dichtungslagenabschnitt 80a' die Dichtungslage 82 in Richtung senkrecht zur Dichtungsplatte überragt, und zwar um die Differenz der Materialdicken der Dichtungslagen 80 und 82. Abgesehen von dem Ausschnitt bzw. den Ausschnitten 82a' verläuft bei der in Fig. 8C dargestellten Modifikation die Kante der dünneren Dichtungslage 82 in der unmittelbaren Nachbarschaft der bei der Bildung des umgefalteten Dichtungslagenabschnitts bzw. der umgefalteten Dichtungslagenabschnitte 80a entstehenden Biegelinie. Im Übrigen gilt für die in der Fig. 8C dargestellten Modifikation dasselbe wie für die in den Fig. 8A und 8B dargestellten Ausführungsformen.

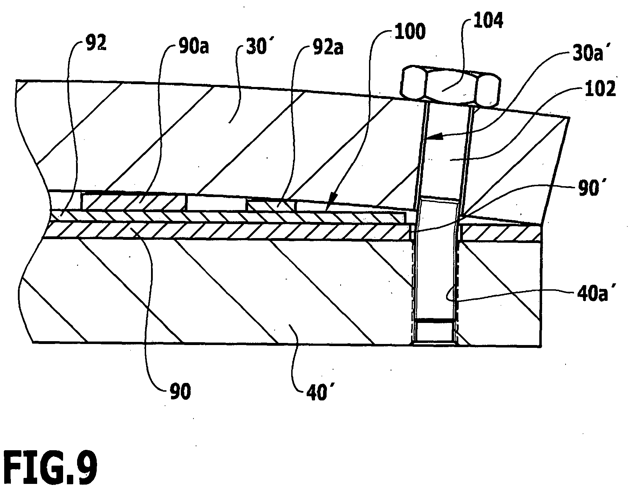

Die Fig. 9 zeigt eine Modifikation der in Fig. 5 dargestellten, eine erfindungsgemäße Flachdichtung enthaltenden Flanschverbindung mit zwei Flanschen 30' und 40', wobei im Vergleich zur Fig. 5 in Fig. 9 die Flanschverbindung nach rechts bis zu einem gemäß Fig. 9 rechten Rand der Flanschverbindung vervollständigt wurde. Eine in Fig. 9 nur teilweise dargestellte Dichtungsplatte 100 einer erfindungsgemäßen Flachdichtung hat eine dickere Dichtungslage 90 sowie eine dünnere Dichtungslage 92, sie könnte aber auch noch weitere Dichtungslagen aufweisen. Ebenso wie bei der in Fig. 5 dargestellten Ausführungsform hat die in Fig. 9 zeichnerisch dargestellte Dichtungsplatte 100 mehrere umgefaltete Dichtungslagenabschnitte, und zwar Dichtungslagenabschnitte 92a der dünneren Dichtungslage 92 sowie Dichtungslagenabschnitte 90a der dickeren Dichtungslage 90, welche alle auf die dünnere Dichtungslage 92 umgefaltet wurden. Bei der Ausführungsform gemäß Fig. 9 dienen Montageschrauben 102 der Verbindung der beiden Flansche 30' und 40' miteinander sowie dem Einspannen der Flachdichtung zwischen diesen beiden Flanschen; jede der Montageschrauben 102 durchgreift ein glattes Schraubenloch 30a' des Flanschs 30' und ist in eine Gewindebohrung 40a' des Flanschs 40' eingeschraubt, und jede Montageschraube 102 hat einen Schraubenkopf 104, welcher gegen den Flansch 30' angezogen wird.

Gemäß der Erfindung sind folgende weitere Modifikationen möglich und unter Umständen vorteilhaft: Bei der dargestellten Ausführungsform hat die dickere Dichtungslage 90 für jede Montageschrauben 102 ein Schraubenloch 90', während die dünnere Dichtungslage 92 vor dem Schaft einer jeden Montageschraube 102 endet (von der Dichtungslage 92 aus zum äußeren Rand der Flanschverbindung gesehen). Es wäre aber auch möglich, auch die dickere Dichtungslage 90 vor dem Schaft einer jeden Montageschraube 102 enden zu lassen. Durch derartige Modifikationen der Dichtungsplatte der erfindungsgemäßen Flachdichtung kann es zwar zu leichten Verbiegungen der Schäfte der Montageschrauben kommen, es wird aber andererseits der Vorteil erreicht, dass die wirksamen Höhen erfindungsgemäßer Abstützeinrichtungen noch weiter abgestuft werden - im Vergleich zu Ausführungsformen, bei denen die Höhenprofile erfindungsgemäßer Abstützeinrichtungen nur durch umgefaltete Dichtungslagenabschnitte bestimmt werden; außerdem erlauben es diese Modifikationen, die Verteilung der durch die Montageschrauben 102 aufgebrachten Pressungskräfte über den die Flachdichtung aufnehmenden Dichtspalt noch zusätzlich zu beeinflussen. Nur der Vollständigkeit halber sei noch bemerkt, dass auch in Fig. 9 die Verformungen der Flansche und die Topographie des Dichtspalts übertrieben dargestellt wurden, um Beides deutlich darstellen zu können.

Wie sich aus der vorstehenden Beschreibung, den beigefügten Zeichnungen sowie den beigefügten Ansprüchen ergibt, ist ein Grundkonzept der Erfindung darin zu sehen, dass eine erfindungsgemäße Flachdichtung mindestens zwei Dichtungslagen mit voneinander verschiedenen Materialdicken aufweist und an mindestens einer dieser Lagen umgefaltete Dichtungslagenabschnitte vorgesehen sind, und zwar bevorzugt an der Dichtungslage mit der größeren Materialdicke; alternativ könnten die umgefalteten Dichtungslagenabschnitte aber auch an der Dichtungslage mit der geringeren Materialdicke vorgesehen sein, wobei dann mindestens einer dieser Dichtungslagenabschnitte mehrfach umgefaltet ist.

Bei bevorzugten Ausführungsformen der erfindungsgemäßen Flachdichtung, welche mindestens zwei Dichtungslagen aufweisen, von denen die eine eine größere Lagendicke als die andere hat, beträgt die Lagendicke der dickeren Dichtungslage das 1,2- bis 1-6-Fache der Lagendicke der dünneren Dichtungslage, insbesondere das 1,25- bis 1,5-Fache der Lagendicke der dünneren Dichtungslage.

Vorzugsweise beträgt die Differenz der Lagendicken ca. 0,05 bis 0,1 mm.

Besonders empfehlenswert ist eine erfindungsgemäße Gestaltung bei mehrlagigen Flachdichtungen mit mindestens zwei Dichtungslagen unterschiedlicher Lagendicke, bei denen die Lagendicke der dünneren Dichtungslage ca. 0,18 bis 0,22 mm und insbesondere ca. 0,2 mm und die Lagendicke der dickeren Dichtungslage ca. 0,22 bis 0,32 mm und insbesondere 0,25 bis 0,30 mm beträgt.

Wenn vorstehend von zwei aufeinander oder übereinander angeordneten Dichtungslagen die Rede ist, so ist dies nicht dahingehend zu verstehen, dass die beiden Dichtungslagen einander unmittelbar benachbart sein müssen, obwohl derartige Ausführungsformen bevorzugt werden; zwischen den beiden in Rede stehenden Dichtungslagen könnte aber auch ein anderes Dichtungselement, wie eine weitere Dichtungslage, angeordnet sein.

## Patentansprüche

1. Flachdichtung mit einer mindestens im Wesentlichen metallischen Dichtungsplatte (10), die mindestens zwei übereinander angeordnete Dichtungslagen (16, 18) aufweist und in welcher mindestens eine abzudichtende Durchgangsöffnung (12) ausgebildet ist, wobei die Dichtungsplatte (10) mindestens eine die Materialgesamtdicke der Dichtungsplatte bereichsweise vergrößernde Abstützeinrichtung (20, 22) aufweist, welche von mehreren umgefalteten Dichtungslagenabschnitten (161, 181) gebildet wird, wobei
die Dichtungsplatte (10) mindestens eine erste Dichtungslage (16) mit mindestens einem ersten Lagenbereich aufweist, in dem die erste Dichtungslage (16) eine erste Lagendicke hat und in dem mindestens ein erster umgefalteter Dichtungslagenabschnitt (161) einer Abstützeinrichtung (20, 22) ausgebildet ist, und wobei die Dichtungsplatte mindestens eine zweite Dichtungslage (18) mit mindestens einem zweiten Lagenbereich aufweist, in dem die zweite Dichtungslage eine zweite Lagendicke hat und in dem mindestens ein zweiter umgefalteter Dichtungslagenabschnitt (181) dieser Abstützeinrichtung (20, 22) ausgebildet ist, **dadurch gek**e**nnzei**c**hn**e**t, dass** die erste und die zweite Lagendicke voneinander verschieden sind, so dass diese Abstützeinrichtung (20, 22) bereichsweise unterschiedliche Materialgesamtdicken aufweist.

2. Flachdichtung nach Anspruch 1, **dadurch gekennzeichnet, dass** mindestens eine Dichtungslage (16, 18) eine Abdichtsicke (16a, 18a) aufweist, welcher - in einer Draufsicht auf die Dichtungsplatte (10) - eine als Stopper für die Sicke gestaltete Abstützeinrichtung zugeordnet und benachbart ist.

3. Flachdichtung nach Anspruch 1 oder 2, **dadurch gekennzeichnet, dass** die mindestens eine Dichtungslage eine, eine Fluid-Durchgangsöffnung (12) umschließende Abdichtsicke (16a, 18a) aufweist und die Abstützeinrichtung (20, 22) - bezogen auf die Durchgangsöffnung (12) - radial außerhalb der Abdichtsicke (16a, 18a) angeordnet ist.

4. Flachdichtung nach einem der Ansprüche 1 bis 3, **dadurch gekennzeichnet, dass** an der Peripherie der Dichtungsplatte (10) mindestens eine Abstützeinrichtung (20, 22) vorgesehen ist.

5. Flachdichtung nach einem der Ansprüche 1 bis 4, **dadurch gekennzeichnet, dass** die Lagendicke der ersten Dichtungslage (16) von der Lagendicke der zweiten Dichtungslage (18) verschieden ist.

6. Flachdichtung nach Anspruch 5, **dadurch gekennzeichnet, dass** die erste und die zweite Dichtungslage (16, 18) Blechlagen aus Blechen unterschiedlicher Blechstärke aufweisen.

7. Flachdichtung nach einem der Ansprüche 1 bis 6, **dadurch gekennzeichnet, dass** mindestens bei eingebauter Flachdichtung die umgefalteten Dichtungslagenabschnitte (161, 181) einer Abstützeinrichtung (20, 22) alle auf einer ersten Hauptoberfläche einer Dichtungslage (16, 18) aufliegen.

8. Flachdichtung nach Anspruch 7, **dadurch gekennzeichnet, dass** die erste Hauptoberfläche eine erste Außenseite der mehrlagigen Dichtungsplatte (10) bildet.

9. Flachdichtung nach Anspruch 8, **dadurch gekennzeichnet, dass** mindestens ein umgefalteter Dichtungslagenabschnitt (161, 181) von einer Dichtungslage (16, 18) gebildet wird, welche die zweite Außenseite der Dichtungsplatte (10) bildet und deren erste Außenseite übergreift.

10. Flachdichtung nach einem der Ansprüche 1 bis 9, **dadurch gekennzeichnet, dass** mindestens bei einem Teil der Dichtungslagenabschnitte (161, 181) diese zungenförmig gestaltet und um die jeweilige Zungenwurzel umgefaltet sind.

11. Flachdichtung nach einem der Ansprüche 1 bis 10, **dadurch gekennzeichnet, dass** mindestens bei einem Teil der Dichtungslagenabschnitte (161, 181) diese streifenförmig gestaltet und an einem Längsrand des jeweiligen Dichtungslagenabschnitts umgefaltet sind.

12. Flachdichtung nach einem der Ansprüche 1 bis 11, **dadurch gekennzeichnet**, das mindestens eine Abstützeinrichtung (20, 22) in einer Draufsicht auf die Dichtungsplatte (10) - länglich gestaltet ist und von mindestens zwei in Längsrichtung der Abstützeinrichtung (20, 22) hintereinander liegenden umgefalteten Dichtungslagenabschnitten (161, 181) gebildet wird, wobei die Materialgesamtdicken der Dichtungsplatte (10) in den Bereichen wenigstens zweier Dichtungslagenabschnitte voneinander verschieden sind.

13. Flachdichtung nach Anspruch 12, **dadurch gekennzeichnet, dass** die Lagendicken wenigstens zweier Dichtungslagenabschnitte (161, 181) voneinander verschieden sind.

14. Flachdichtung nach Anspruch 12 oder 13, **dadurch gekennzeichnet, dass** die Abstützeinrichtung (20, 22) von mindestens zwei in den Längsendbereichen der Abstützeinrichtung vorgesehenen ersten umgefalteten Dichtungslagenabschnitten (181) und mindestens einem in einem mittleren Bereich der Abstützeinrichtung vorgesehenen zweiten umgefalteten Dichtungslagenabschnitt (161) gebildet wird, wobei die Materialgesamtdicken der Dichtungsplatte (10) in den Bereichen der ersten Dichtungslagenabschnitte (181) und im Bereich des zweiten Dichtungslagenabschnitts (161) voneinander verschieden sind.

15. Flachdichtung nach Anspruch 14, **dadurch gekennzeichnet, dass** - in einer Draufsicht auf die Dichtungsplatte (10) - sich die längliche Abstützeinrichtung (20, 22) zwischen zwei Schraubenlöchern (14) für den Durchtritt von Montageschrauben erstreckt und die Materialgesamtdicke der Abstützeinrichtung in Schraubenloch-nahen Bereichen kleiner ist als in einem zwischen diesen Schraubenloch-nahen Bereichen liegenden Mittelbereich der Abstützeinrichtung.

16. Flachdichtung nach einem der Ansprüche 1 bis 15, **dadurch gekennzeichnet, dass** die Dichtungsplatte mindestens eine dickere (80) sowie eine dünnere (82) Dichtungslage und die Abstützeinrichtung mindestens zwei Dichtungslagenabschnitte der dickeren Dichtunaslage (80) aufweist, von denen ein erster (80a) auf die dickere und ein zweiter (80b) auf die dünnere Dichtungslage umgefaltet ist.

17. Flachdichtung nach Anspruch 16, **dadurch gekennzeichnet, dass** die dünnere Dichtungstage (82) eine Aussparung (82a') aufweist, welche - in einer Draufsicht auf die Dichtungsplatte (10) - den umgefalteten ersten Dichtungslagenabschnitt (80a') zumindest im Wesentlichen aufnimmt, so dass die von der dickeren (80) und der dünneren (82) Dichtungslage gebildete Materialgesamtdicke im Bereich des umgefalteten zweiten Dichtungslagenabschnitts (80b) um die Lagendicke der dünneren Dichtungslage (82) größer ist als im Bereich des umgefalteten ersten Dichtungslagenabschnitts (80a').

18. Flachdichtung nach einem der Ansprüche 1 bis 17, **dadurch gekennzeichnet, dass** sich die beiden Dichtungslagen (16, 18) zumindest im Wesentlichen über die gesamte Dichtungsplatt erstrecken.

19. Flachdichtung mit einer mindestens im Wesentlichen metallischen Dichtungsplatte (10), die mindestens zwei aufeinander angeordnete Dichtungslagen (80, 82) aufweist und in welcher mindestens eine abzudichtende Durchgangsöffnung ausgebildet ist, wobei die Dichtungsplatten (10) mindestens eine die Materialgesamtdicke der Dichtungsplatte bereichsweise vergrößernde Abstützeinrichtung aufweist, welche von mehreren mgefalteten Dichtungslagenabschnitten (80a, 80b) gebildet wird, wobei die Dichtungsplatte mindestens eine erste Dichtungslage (80) mit einer ersten Lagendicke sowie eine zweite Dichtungslage (82) mit einer zweiten Lagendicke aufweist, und wobei die Abstützeinrichtung mindestens einen ersten (80a) sowie einen zweiten (80b) umgefalteten Dichtungslagenabschnitt der ersten Dichtungslage (80) aufweist, wobei der erste Dichtungslagenabschnitt (80a) auf die erste Dichtungslage (80) und der zweite Dichtungslagenabschnitt (80b) auf die zweite Dichtungslage (82) umgefaltet ist, **dadurch gekennzeichnet, dass** die erste Lagendicke größer als die zweiten Lagendicke ist.

20. Flachdichtung nach Anspruch 19, **dadurch gekennzeichnet, dass** die zweite Dichtungslage (82) eine Aussparung (82a) aufweist, welche - in einer Draufsicht auf die Dichtungsplatte - den umgefalteten ersten Dichtungslagenabschnitt (80a') zumindest im Wesentlichen aufnimmt, so dass die von der ersten (80) und der zweiten (82) Dichtungslage gebildete Materialgesamtdicke im Bereich des umgefalteten zweiten Dichtungslagenabschnitts (80b) um die zweite Lagendicke (82) größer ist als im Bereich des umgefalteten ersten Dichtungslagenabschnitts (80a').

## Claims

1. Flat gasket comprising an at least substantially metallic gasket plate (10), which has at least two gasket layers (16, 18) arranged on each other and in which at least one through-opening (12) to be sealed is formed, the gasket plate (10) comprising at least one supporting device (20, 22) which increases the total material thickness of the gasket plate in areas thereof and is formed by several folded-over gasket layer sections (161, 181), the gasket plate (10) having at least one first gasket layer (16) with at least one first layer area in which the first gasket layer (16) has a first layer thickness and in which at least one first folded-over gasket layer section (161) of a supporting device (20, 22) is formed, and the gasket plate having at least one second gasket layer (18) with at least one second layer area in which the second gasket layer has a second layer thickness and in which at least one second folded-over gasket layer section (181) of this supporting device (20, 22) is formed, **characterized in that** the first and second layer thicknesses are different from each other and this supporting device (20, 22), therefore, has different total material thicknesses in areas thereof.

2. Flat gasket in accordance with claim 1, **characterized in that** at least one gasket layer (16, 18) comprises a sealing bead (16a, 18a) which - in a plan view of the gasket plate (10) - has a supporting device configured as stopper for the bead associated with and adjacent to it.

3. Flat gasket in accordance with claim 1 or 2, **characterized in that** the at least one gasket layer comprises a sealing bead (16a, 18a) enclosing a fluid through-opening (12), and the supporting device (20, 22) is arranged - in relation to the through-opening (12) - radially outside of the sealing bead (16a, 18a).

4. Flat gasket in accordance with any one of claims 1 to 3, **characterized in that** at least one supporting device (20, 22) is provided at the periphery of the gasket plate (10).

5. Flat gasket in accordance with any one of claims 1 to 4, **characterized in that** the layer thickness of the first gasket layer (16) is different from the layer thickness of the second gasket layer (18).

6. Flat gasket in accordance with claim 5, **characterized in that** the first and second gasket layers (16, 18) comprise sheet metal layers of sheet metals of different sheet thickness.

7. Flat gasket in accordance with any one of claims 1 to 6, **characterized in that** at least when the flat gasket is installed, the folded-over gasket layer sections (161, 181) of a supporting device (20, 22) all lie on a first main surface of a gasket layer (16, 18).

8. Flat gasket in accordance with claim 7, **characterized in that** the first main surface forms a first outer side of the multilayered gasket plate (10).

9. Flat gasket in accordance with claim 8, **characterized in that** at least one folded-over gasket layer section (161, 181) is formed by a gasket layer (16, 18) which forms the second outer side of the gasket plate (10) and engages over the first outer side thereof.

10. Flat gasket in accordance with any one of claims 1 to 9, **characterized in that** at least some of the gasket layer sections (161, 181) are of tongue-shaped configuration and are folded over around the respective tongue root.

11. Flat gasket in accordance with any one of claims 1 to 10, **characterized in that** at least some of the gasket layer sections (161, 181) are of strip-shaped configuration and are folded over at a longitudinal edge of the respective gasket layer section.

12. Flat gasket in accordance with any one of claims 1 to 11, **characterized in that** at least one supporting device (20, 22) - in a plan view of the gasket plate (10) - is of elongate configuration and is formed by at least two folded-over gasket layer sections (161, 181) lying one behind the other in the longitudinal direction of the supporting device (20, 22), the total material thicknesses of the gasket plate (10) in the areas of at least two gasket layer sections being different from each other.

13. Flat gasket in accordance with claim 12, **characterized in that** the layer thicknesses of at least two gasket layer sections (161, 181) are different from each other.

14. Flat gasket in accordance with claim 12 or 13, **characterized in that** the supporting device (20, 22) is formed by at least two first folded-over gasket layer sections (181) provided in the longitudinal end areas of the supporting device and at least one second folded-over gasket layer section (161) provided in a central area of the supporting device, the total material thicknesses of the gasket plate (10) in the areas of the first gasket layer sections (181) and in the area of the second gasket layer section (161) being different from one another.

15. Flat gasket in accordance with claim 14, **characterized in that** - in a plan view of the gasket plate (10) - the elongate supporting device (20, 22) extends between two screw holes (14) for the passage of assembly screws, and the total material thickness of the supporting device in areas near the screw holes is less than in a central area of the supporting device lying between these areas near the screw holes.

16. Flat gasket in accordance with any one of claims 1 to 15, **characterized in that** the gasket plate comprises at least one thicker (80) and one thinner (82) gasket layer, and the supporting device comprises at least two gasket layer sections of the thicker gasket layer (80), a first one (80a) of which is folded over onto the thicker gasket layer and a second one (80b) of which is folded over onto the thinner gasket layer.

17. Flat gasket in accordance with claim 16, **characterized in that** the thinner gasket layer (82) has a recess (82a') which - in a plan view of the gasket plate (10) - accommodates the folded-over first gasket layer section (80a') at least substantially, and the total material thickness formed by the thicker (80) and thinner (82) gasket layers in the area of the folded-over second gasket layer section (80b) is, therefore, greater by the layer thickness of the thinner gasket layer (82) than in the area of the folded-over first gasket layer section (80a').

18. Flat gasket in accordance with any one of claims 1 to 17, **characterized in that** the two gasket layers (16, 18) extend at least substantially over the entire gasket plate.

19. Flat gasket comprising an at least substantially metallic gasket plate (10), which has at least two gasket layers (80, 82) arranged on each other and in which at least one through-opening to be sealed is formed, the gasket plate (10) comprising at least one supporting device which increases the total material thickness of the gasket plate in areas thereof and is formed by several folded-over gasket layer sections (80a, 80b), the gasket plate having at least one first gasket layer (80) with a first layer thickness and a second gasket layer (82) with a second layer thickness, and the supporting device comprising at least one first (80a) and one second (80b) folded-over gasket layer section of the first gasket layer (80), the first gasket layer section (80a) being folded over onto the first gasket layer (80), and the second gasket layer section (80b) being folded over onto the second gasket layer (82), **characterized in that** the first layer thickness is greater than the second layer thickness.

20. Flat gasket in accordance with claim 19, **characterized in that** the second gasket layer (82) has a recess (82a') which - in a plan view of the gasket plate - accommodates the folded-over first gasket layer section (80a') at least substantially, and the total material thickness formed by the first (80) and second (82) gasket layers in the area of the folded-over second gasket layer section (80b) is, therefore, greater by the second layer thickness (82) than in the area of the folded-over first gasket layer section (80a').

## Revendications

1. Joint plat avec une plaque d'étanchéité (10) au moins essentiellement métallique, qui comporte au moins deux couches d'étanchéité (16, 18) agencées l'une sur l'autre, et dans laquelle est ménagée au moins une ouverture de passage (12) à rendre étanche, la plaque d'étanchéité (10) comportant au moins un dispositif d'appui (20, 22), qui augmente par endroits l'épaisseur totale de matériau de la plaque d'étanchéité et qui est constitué de plusieurs sections de couche d'étanchéité repliées (161, 181), la plaque d'étanchéité (10) comportant au moins une première couche d'étanchéité (16) avec au moins d'une première partie de couche, dans laquelle la première couche d'étanchéité (16) présente une première épaisseur de couche et dans laquelle est réalisée au moins une première section de couche d'étanchéité repliée (161) d'un dispositif d'appui (20, 22), et la plaque d'étanchéité présente au moins une deuxième couche d'étanchéité (18) avec au moins une deuxième partie de couche, dans laquelle la deuxième couche d'étanchéité présente une deuxième épaisseur de couche et dans laquelle est réalisée au moins une deuxième section de couche d'étanchéité repliée (181) dudit dispositif d'appui (20, 22), **caractérisé en ce que** la première épaisseur de couche et la deuxième épaisseur de couche sont différentes l'une de l'autre, de sorte que ledit dispositif d'appui (20, 22) présente une épaisseur totale de matériau différente par endroits.

2. Joint plat selon la revendication 1, **caractérisé en ce qu'**au moins une couche d'étanchéité (16, 18) présente une nervure d'étanchéité (16a, 18a) auquel est attribué un dispositif d'appui, en forme de stoppeur pour la nervure, sur une vue de dessus de la plaque d'étanchéité (10), et en est voisin.

3. Joint plat selon la revendication 1 ou la revendication 2, **caractérisé en ce qu'**au moins une couche d'étanchéité présente une nervure d'étanchéité (16a, 18a) entourant une ouverture de passage (12) d'un fluide et **en ce que** le dispositif d'appui (20, 22) est disposé radialement à l'extérieur de la nervure d'étanchéité (16a, 18a) par rapport à l'ouverture de passage (12).

4. Joint plat selon l'une quelconque des revendications 1 à 3, **caractérisé en ce que** au moins un dispositif d'appui (20, 22) est prévu à la périphérie de la plaque d'étanchéité (10).

5. Joint plat selon l'une quelconque des revendications 1 à 4, **caractérisé en ce que** l'épaisseur de la première couche d'étanchéité (16) est différente de l'épaisseur de la deuxième couche d'étanchéité (18).

6. Joint plat selon la revendication 5, **caractérisé en ce que** la première et la deuxième couche d'étanchéité (16, 18) présentent des couches de tôles de différentes épaisseurs de tôle.

7. Joint plat selon l'une quelconque des revendications 1 à 6, **caractérisé en ce que** les sections de couche d'étanchéité repliées (161, 181) d'un dispositif d'appui (20, 22) reposent toutes sur une première surface principale d'une couche d'étanchéité (16, 18) au moins pour un joint plat en place.

8. Joint plat selon la revendication 7, **caractérisé en ce que** la première surface principale forme un premier côté extérieur de la plaque d'étanchéité (10) à plusieurs couches.

9. Joint plat selon la revendication 8, **caractérisé en ce qu'**au moins une section de couche d'étanchéité repliée (161, 181) est formée par une couche d'étanchéité (16, 18) qui forme le deuxième côté extérieur de la plaque d'étanchéité (10) et qui chevauche sa premier côté extérieur.

10. Joint plat selon l'une quelconque des revendications 1 à 9, **caractérisé en ce qu'**au moins une partie des sections de couche d'étanchéité (161, 181) sont en forme de languette et sont repliées autour de la base de la languette respective.

11. Joint plat selon l'une quelconque des revendications 1 à 10, **caractérisé en ce qu'**au moins une partie des sections de couche d'étanchéité (161, 181) sont en forme de bande et sont repliées sur une bordure longitudinale de la section de couche d'étanchéité respective.

12. Joint plat selon l'une quelconque des revendications 1 à 11, **caractérisé en ce qu'**au moins un dispositif d'appui (20, 22), sur une vue de dessus de la plaque d'étanchéité (10), a une forme allongée et est formé par au moins deux sections de couche d'étanchéité repliées (161, 181) situées l'une derrière l'autre dans le sens longitudinal du dispositif d'appui, les épaisseurs totales de matériau de la plaque d'étanchéité (10) étant différentes l'une de l'autre dans les zones d'au moins deux sections de couche d'étanchéité.

13. Joint plat selon la revendication 12, **caractérisé en ce que** les épaisseurs de couche d'au moins deux sections de couche d'étanchéité (161, 181) sont différentes l'une de l'autres.

14. Joint plat selon la revendication 12 ou la revendication 13, **caractérisé en ce que** dispositif d'appui (20, 22) est formé par au moins deux premières sections de couche d'étanchéité (181) repliées prévues dans les zones longitudinales terminales du dispositif d'appui et par au moins une deuxième section de couche d'étanchéité (161) repliée prévue dans une zone médiane du dispositif d'appui, les épaisseurs totales de matériau de la plaque d'étanchéité (10) étant différentes l'une de l'autre dans les zones des premières sections de couche d'étanchéité (181) et dans la zone de la deuxième section de couche d'étanchéité (161).

15. Joint plat selon la revendication 14, **caractérisé en ce que**, sur une vue de dessus de la plaque d'étanchéité (10), le dispositif d'appui allongé (21, 22) s'étend entre deux trous de vis (14) destinés au passage de vis de montage et l'épaisseur totale de matériau du dispositif d'appui est, dans des zones proches du trou de vis, plus petite que dans des zones médianes du dispositif d'appui se trouvant entre ces zones proches du trou de vis.

16. Joint plat selon l'une quelconque des revendications 1 à 15, **caractérisé en ce que** la plaque d'étanchéité présente au moins une couche d'étanchéité plus épaisse (80) et une couche d'étanchéité plus mince (82) et le dispositif d'appui au moins deux sections de couche d'étanchéité de la couche d'étanchéité plus épaisse (80), dont une première (80a) est repliée sur la couche d'étanchéité plus épaisse et une deuxième (80b) est repliée sur la couche d'étanchéité plus mince.

17. Joint plat selon la revendication 16, **caractérisé en ce que** la couche d'étanchéité plus mince (82) présente un évidement (82a') qui, sur une vue de dessus de la plaque d'étanchéité (10), accueille au moins pour l'essentiel la première section de couche d'étanchéité (80a') repliée, de sorte que l'épaisseur totale de matériau formée par la couche d'étanchéité plus épaisse (80) et la couche d'étanchéité plus mince (82) est plus importante, dans la zone de la deuxième section de couche d'étanchéité repliée (80b), d'une valeur égale à l'épaisseur de la couche d'étanchéité plus mince (82), que dans la zone de la première section de couche d'étanchéité repliée (80a').

18. Joint plat selon l'une quelconque des revendications 1 à 17, **caractérisé en ce que** les deux couches d'étanchéité (16, 18) s'étendent, au moins pour l'essentiel, sur toute la plaque d'étanchéité.

19. Joint plat avec une plaque d'étanchéité (10) au moins essentiellement métallique, qui comporte au moins deux couches d'étanchéité (80, 82) agencées l'une sur l'autre, et dans laquelle est ménagée au moins une ouverture de passage à rendre étanche, la plaque d'étanchéité (10) comportant au moins un dispositif d'appui, qui augmente au moins par endroits l'épaisseur totale de matériau de la plaque d'étanchéité et qui est constitué de plusieurs sections de couche d'étanchéité repliées (80a, 80b), la plaque d'étanchéité comportant au moins une première couche d'étanchéité (80) avec une première épaisseur de couche et une deuxième couche d'étanchéité (82) d'une deuxième épaisseur de couche, le dispositif d'appui présentant au moins une première (80a) et une deuxième (80b) sections de couche d'étanchéité repliées de la première couche d'étanchéité (80), la première section de couche d'épaisseur (80a) étant repliée sur la première couche d'étanchéité (80), et la deuxième section de couche d'étanchéité (80b) étant repliée sur la deuxième couche d'étanchéité (82), **caractérisé en ce que** la première épaisseur de couche est plus épaisse que la deuxième épaisseur de couche.

20. Joint plat selon la revendication 19, **caractérisé en ce que** la deuxième couche d'étanchéité (82) présente un évidement (82a') qui, sur une vue de dessus de la plaque d'étanchéité, accueille, du moins pour l'essentiel, la première section de couche d'étanchéité (80a') repliée, de sorte que l'épaisseur totale de matériau formée par la première (80) et la deuxième (82) couches d'étanchéité est plus importante, dans la zone de la deuxième section de couche d'étanchéité (80b) repliée, d'une valeur égale à la deuxième épaisseur de couche (82), que dans la zone de la première section de couche d'étanchéité (80a') repliée.
